# EUROPEAN PATENT APPLICATION

(11) **EP 1 675 109 A2**
(43) Date of publication of application: **28.06.2006**
(21) Application number: 05112182.0
(22) Date of filing: 14.12.2005
(51) Int. Cl.: G11B 7/09

(54) **Optical disc recording/reproducing apparatus**

(30) Priority: 27.12.2004 JP 2004376450
(71) Applicant: KABUSHIKI KAISHA TOSHIBA, Tokyo 105-8001 (JP)
(72) Inventor: Kon, Yoshitaka, IP Division Toshiba Corporation, 105-8001, Tokyo (JP); Magome, Takahiro, IP Division Toshiba Corporation, 105-8001, Tokyo (JP)
(74) Representative: Henkel, Feiler & Hänzel

(57) **Abstract**

An optical disc recording/reproducing apparatus (1) according to the present invention has a CPU (5) which holds the largeness of a driving current supplied from a LD driving circuit (36) to a laser diode (11) in a sample hold circuit (33) of an APC circuit (3), interrupts a driving signal supplied from the LD driving circuit to the laser diode, and outputs the driving current of the largeness held in the sample hold part from the LD driving circuit to the laser diode at the end of offset correction by an offset correction mechanism, when an offset is detected by offset detectors (54, 67), and an offset is corrected by offset correction mechanisms (63, 66), thereby improving the tracking performance of the servo system and enabling stable control without a malfunction.

## Description

The present invention relates to an optical disc recording/reproducing apparatus (information recording/reproducing apparatus) which records, reproduces and erases information on/from an optical disc able to record, reproduce and erase information, by using a laser beam.

An optical disc is widely used as a recording medium suitable for recording information. Various optical discs of different standards are proposed and used. By the recording capacity, these optical discs are classified into CD and DVD. By the uses, the discs are sorted into a read-only type containing prerecorded information (called a ROM), a write once type able to record information only once (called a -R), and a rewritable type able to record and erase information repeatedly (called a RAM or RW).

An optical disc recording/reproducing apparatus, which records information on optical discs of above-mentioned various standards or erasing or reproducing recorded information, includes a light transmitting system to transmit a laser beam with a fixed wavelength to a fixed position on the recording surface of an optical disc (a recording medium), a light receiving system to detect a laser beam reflected on an optical disc, a mechanical unit represented by a disc motor and a disc loading mechanism, a mechanical control (servo) system to control the light transmitting system, a light receiving system and mechanical unit, and a signal processing unit which supplies recording information and erasing signals to the light transmitting system, and reproduces recorded information by the signal detected by a light receiving system.

The light transmitting system and light receiving system include an LD (Laser Diode) as a light source to emit a laser beam, and an object lens, which condenses a laser beam from the LD on the recording surface of an optical disc and captures a laser beam reflected on an optical disc.

It is known that the intensity and wavelength of a laser beam outputted from an LD depend on the ambient temperature and continuous laser beam output, and vary randomly in each operation of recording, reproducing and erasing. Thus, in many cases, an optical disc recording/reproducing apparatus is provided with an APC (Automatic Power Control) circuit to keep the intensity and wavelength of a laser beam within a certain control range.

The position of an object lens is always controlled by the servo system to follow securely a track or a record mark on an optical disc, but an offset component is generated in the amount of control caused by ambient temperature changes and long-time continuous recording/reproducing. Thus, various mechanisms and methods have been proposed to compensate the amount of control of a servo system.

The Published Japanese Patent No. 2910350 discloses an optical memory unit comprising a light source, two or more optical detectors, a signal processing means for performing operations of a signal detected by the optical detectors, a control signal generating means for generating a control signal based on a pre-format signal generated by the signal processing means, an optical output controlling means for controlling a light source by signals from the control signal generating means, a servo controlling means for performing servo control based on a servo error signal generated by the signal processing means, an offset detecting means for detecting an offset of a servo error signal by the control signal from the control signal generating means while the light source is not emitting a light beam, an offset correcting means for correcting an offset of the servo error signal by the output of the offset detecting means, and a temperature detecting means for detecting a temperature in the optical memory unit, wherein an offset correction interval is controlled according to the ratio of changes with time of the temperature detected by the temperature detecting means.

The control of offset correction intervals is described in the above document, but the offset correction time required for correcting an offset is not described.

It is necessary to stop a laser beam output for correcting an offset of a servo system. When recorded information is reproduced during a request to increase a record speed (called "n times" with reference to reproducing time) or a recording operation, for example, time for correcting an offset may not be ensured. This may cause a malfunction of the servo system, and may raise a serious problem of the uncertain recording of information, for example.

According to an aspect of the present invention, there is provided an optical disc recording/reproducing apparatus comprising:
an optical head for focusing light from a light source on a recording medium;
a signal processing means for detecting at least one of a focus servo error signal and a tracking servo error signal for correcting an offset of the optical head;
a light emission controlling means for stopping an output of light from a light source while information is being recorded in or reading out from a recording medium;
a servo holding means for holding at least one of a focus servo error signal and a tracking servo error signal, while an output of light from a light source is being stopped by the light emission controlling means;
an offset detecting means for detecting an offset component of a corresponding error signal, while at least one of focus servo error signal and tracking servo error signal is being held by the servo holding means;
an offset correcting means for correcting an offset component of the corresponding error signal, based on the output of the offset detecting means;
a temperature detecting means for detecting a temperature in the apparatus; and
a buffer memory for holding temporarily information reading out from a recording medium,
wherein the timing of stopping an output of light from a light source by the light emission controlling means is when a temperature change in the apparatus detected by the temperature detecting means exceeds a preset range, and
the time to hold the servo error signal is set within a range of time required to read reproducing information from a buffer memory.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram showing an example of an optical disc recording/reproducing apparatus according to an embodiment of the prevent invention;
FIG. 2 is a flowchart showing an example of operations for generating a control signal in the optical disc recording/reproducing apparatus shown in FIG. 1;
FIG. 3 is a timing chart showing an example of timing of various control signals corresponding to the flowchart shown in FIG. 2;
FIG. 4 is a flowchart showing an example of operation for correcting a focus servo offset and a track servo offset in the optical disc recording/reproducing apparatus shown in FIG. 1; and
FIG. 5 is a timing chart showing an example of timing of operations of each component corresponding to the flowchart shown in FIG. 4.

Embodiment of the present invention will be explained hereinafter with reference to the accompanying drawings.

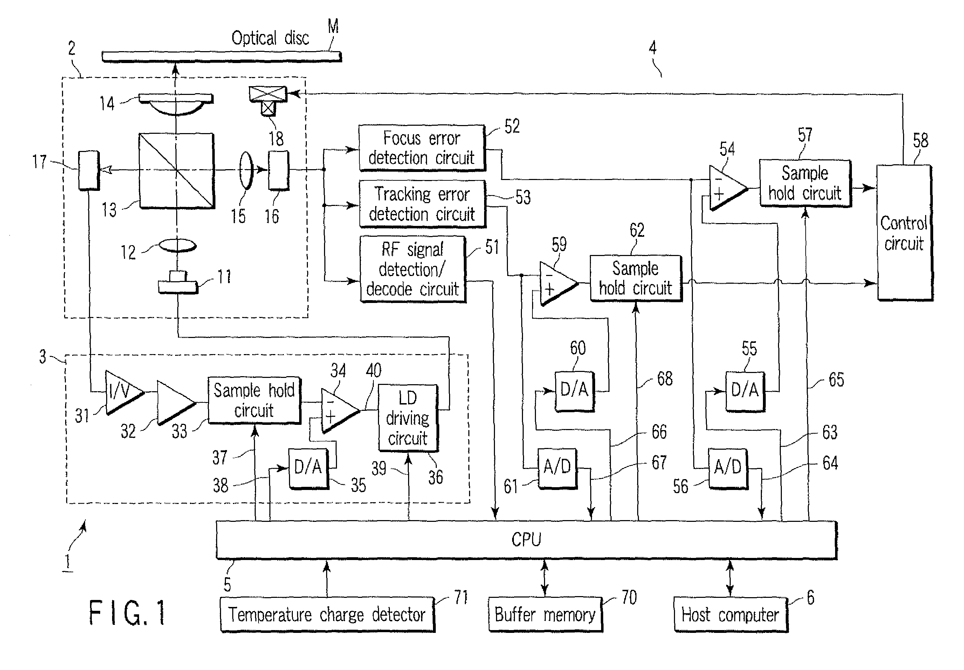

FIG. 1 is a schematic diagram showing an example of an optical disc recording/reproducing apparatus according to an embodiment of the prevent invention.

As shown in FIG. 1, an optical disc recording/reproducing apparatus 1 includes an optical head 2 for radiating a light beam with a fixed wavelength to the recording surface of a recording medium M. An optical head 2 is connected to an APC (Automatic Power Control) circuit 3, which is incorporated in the optical head 2 and controls the amount of the output light of a semiconductor laser diode (described later) to output a light beam with a fixed wavelength. The optical head 2 is also connected to a signal processor 4, which controls the position of the optical head 2 to have a fixed relation to the recording surface of the recording medium M to read the prerecorded information of the recording medium M, record and erase information on/from the recording medium M, and reproducing the information taken out by the optical head 2.

The APC circuit 3 and signal processor 4 are connected to a main control unit (CPU) 5 used for setting the timing of operations, and signal transfer with external units, setting the amount of control depending on the temperature data from a temperature sensor to detect ambient temperatures, for example.

The CPU 5 is connected to a buffer memory 70, a temperature change detector (a temperature sensor) 71 and a host computer 6. The CPU 5 also controls a not-shown spindle motor to rotate the recording medium M at a fixed speed, and a motor driving circuit to control the speed of the spindle motor.

The recording medium M is an optical disc of the DVD standard, or a disc of various types, such as, DVD-RAM able to erase information and record new information (rewritable), DVD-R able to write new information and DVD-ROM with prerecorded information. The present invention is applicable also to a disc of the CD standard and discs of new standards to be defined in the future.

The optical head 2 is provided with a semiconductor laser (LD) 11 as a laser source to emit a laser beam to record (erase) information on the optical disc M, or reproduce the information of the optical disc M.

A laser beam with a wavelength of 780 nm or 650 nm emitted from the semiconductor laser (LD) 11 is applied to a collimator lens 12 and converted into a parallel luminous flux, and then condensed at a fixed position on the optical disc M, for example, a groove (track) formed previously on the recording surface of an optical disc, or a string of record marks (pits), through a beam splitter 13 and an object lens 14. In this time, the optical disc M is rotated by the spindle motor at a predetermined speed such that the groove or record mark string is moved with required speed.

A return light (reflected laser beam) reflected on the optical disc M is captured by the object lens 14, separated from an incident light by a beam splitter 13 and led to a detector lens 15. The reflected laser beam led to the detector lens 15 is condensed on a photo detector (PD) having a four-divided light-receiving area, for example, and converted into an electric signal of a level equivalent to the intensity of the light condensed on each light-receiving area.

The outputs from each divided area of the photo detector 16 forms a base of an RF signal becoming an information (reproduce) signal, a servo signal for focusing and a servo signal for tracking, and is supplied to the signal processor 4 and used for known addition and subtraction though not described in detail.

The output of PD 16 used for the RF signal is applied to a RF signal detection/decode circuit 51, reproducing as information recorded on the optical disc M, and stored in a buffer memory 70 through the CPU 5.

The outputs of PD 16 used for the servo signal for focusing and servo signal for tracking are applied to a focus error detection circuit 52 and a tracking error detection circuit 53, respectively, and used for the servo control of an actuator 18 for focusing/tracking to the object lens 14. Thus, the position of the object lens 14 is controlled so that a laser beam is condensed on the recording surface of the optical disc M in the focused state and correctly on the groove or record mark string.

Besides the PD 16, the optical head 2 is provided with a monitoring optical detector 17 for detecting the intensity of the laser beam output from the LD 11. The intensity of a laser beam from the LD 11 detected by the APC circuit 3 is used for APC control explained below, after the output of the monitoring optical detector 17 is taken in by the control of the CPU 5.

In the APC control, first a LD off signal 39 is supplied to a LD driving circuit 36 at a fixed timing for a fixed time. Namely, the LD off signal 39 is held at an H-level for a fixed time. Therefore, a laser driving current supplied from the LD driving circuit 36 to the LD 11 is interrupted, and the laser beam output from the LD 11 is stopped (LD does not emit light).

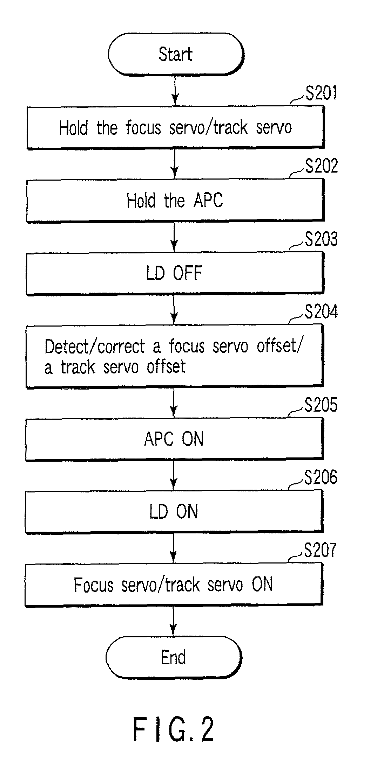

In particular, first a focus servo/track servo is held as shown in FIG. 2.

In the focusing system, an operational amplifier 54 amplifies a focus error signal and corrects an offset. Namely, reference data is supplied to a D/A converter 55 and an initial adjustment value is added by the control of CPU 5. Then, a focus servo hold control signal 65 is outputted to a sample hold circuit 57, before the output of a semiconductor laser (LD) 11 is stopped.

The sample hold circuit 57 holds the level of a focus servo signal just before the laser beam output from the LD 11 is stopped. Therefore, an actuator 18 is displaced to the focus control direction based on the output of the control circuit 58. In this time, an A/D converter 56 detects a level of the focus error signal when the semiconductor laser 11 is off. Thus, a correction value is calculated from the amount of offset. Next, the D/A converter 55 converts the correction value into a correction signal (amount), and corrects a focus offset.

Like in the focusing system, an offset is corrected in the tracking servo system. Namely, the operational amplifier 59 amplifies a track error signal, and corrects an offset.

In particular, reference data is supplied to a D/A converter 60, and an initial adjustment value is added by the control of CPU 5. Then, a track servo hold control signal 68 is outputted to a sample hold circuit 62, before the output of a semiconductor laser (LD) 11 is stopped. Thereafter, an actuator 18 is displaced to the track control direction based on the output of a control circuit 58. In this time, an A/D converter 61 detects a level of the tracking error signal when the semiconductor laser 11 is off. Thus, a correction value is calculated from the amount of offset. Next, the D/A converter 60 converts the correction value into a correction signal (amount), and corrects a track offset.

Next, explanation will be given on the control of the intensity of a laser beam by the APC circuit 3.

The APC circuit 3 includes a monitoring detector 17, a current/voltage conversion circuit or I/V converter 31 to convert the output current from the monitoring detector 17 into a voltage, an amplifier 32 (may be a multiple stage) to amplify the output voltage of the I/V converter 31 by comparing with a fixed reference voltage, a current control amplifier 34 configured as a differential amplifier to compare a target voltage value equivalent to a target light-emitting power (a laser beam intensity) applied through the D/A converter 35 with the output voltage of the amplifier 32, and an LD driving circuit 36 which sets a driving current value supplied actually to the LD 11 based on the output voltage value from the current control amplifier 34, and supplies the driving current to the LD 11. Namely, in the APC circuit, the current value that is detected by the optical detector 17 and equivalent to the intensity of the laser beam from the LD 11 is converted into a voltage signal by the I/V converter 31, and the intensity of the laser beam outputted from the LD 11 is sequentially corrected by being compared with the target voltage value by the CPU 5.

In the APC circuit 3, a sample hold circuit 33 controlled by a control signal 37 from the CPU 5 is provided between the amplifier 32 and current control amplifier 34.

First, explanation will be given on the ordinary APC operation for reproducing. When a driving current for reproducing is supplied from the LD driving circuit 36, a laser beam is emitted from the semiconductor laser 11 and condensed on the optical disc M, and information is reading out.

In this time, a part of the laser beam emitted from the semiconductor laser 11 is applied to the optical detector 17, and a monitor current (monitor signal) of the level proportional to the level of the emitting power is outputted to the I/V converter 31. The current is converted into a voltage by the I/V converter. The converted voltage (monitor voltage) is amplified by the amplifier 32, and outputted to the current control amplifier 34 through the sample hold circuit 33.

The current control amplifier 34 is supplied with a target voltage according to a target reproducing light-emitting power, from the CPU 5 through the D/A converter 35. Therefore, the current control amplifier 34 supplies the LD driving circuit 36 with a driving signal controlled to make the output voltage of the amplifier 32 always identical to the target voltage.

In the LD driving circuit 36, a driving current value of a reproducing light-emitting power is set according to the level of this driving signal, and a driving current is supplied to the LD 11. By this APC operation, the intensity of the laser beam outputted from the LD 11 is always held at the target reproducing light-emitting power.

Since the intensity of a laser beam from the LD 11 is set through the APC circuit 3, when an instruction to output a laser beam is given again after the driving current is interrupted (when the driving current is supplied), much time is required to stabilize the laser beam intensity at the control target level. Therefore, by holding the driving current value just before the driving current to the LD 11 is interrupted, the time required to control the intensity by the APC circuit 3 after re-lighting is reduced and the continuity of control is held.

Namely, the control signal 37 is set to an H-level (ON) just before the laser beam output from the LD 11 is stopped by the control of CPU 5, the output voltage (driving current value) 40 of the amplifier 32 just before the output of the LD 11 is stopped by the sample hold circuit 33, and the control signal 37 is switched to an L-level (OFF) just before the LD 11 is lit again (a laser beam is outputted). The LD 11 is lit again, and then the original APC operation by the APC circuit 3 can be restarted from the driving current value just before the LD output, and the APC circuit 3 can be promptly set to the target value.

In the optical disc recording/reproducing apparatus 1 shown in FIG. 1, a buffer memory 70 is added to store temporarily the reproducing information read from the optical disc M before it is outputted to the host 6. In many cases, a general optical information recording/reproducing apparatus (optical disc recording/reproducing apparatus) has such a buffer memory. For example, when recording information on a DVD-RAM disk M, discontinuance of data during recording is not permitted. By storing recording data temporarily in the buffer memory 70, the recording data can be continuously supplied to the optical disc M even if the transfer of input data from the host 6 is interrupted. Even if the servo is temporarily disengaged due to a vibration during the reproducing operation, continuous data transfer to the host 6 is possible.

Further, the optical disc recording/reproducing apparatus 1 shown in FIG. 1 is provided with a temperature change detector (temperature sensor) 71 to detect temperature change in the apparatus. The temperature change detector 71 is connected to the CPU 5. A detected temperature in the optical disc recording/reproducing apparatus 1 (detected output) is supplied to the CPU 5. The CPU 5 monitors the detected output, and when the temperature change (detected output) exceeds a preset range, the CPU 5 stops the laser beam output from the LD 11 for a while, and starts offset adjustment to correct an offset of the servo system.

Namely, the optical disc recording/reproducing apparatus 1 shown in FIG. 1 always monitors temperature change in the optical disc recording/reproducing apparatus that is a main cause of a temperature drift occurred in the reproducing operation, based on the output of the temperature change detector 71. When the temperature change exceeds the range preset not to affect the offset of the servo circuit caused by a temperature drift, the apparatus stops the laser beam output from the semiconductor laser (LD) 11 for a while and corrects the offset of the servo circuit. In many cases, the position of the object lens is always controlled by the servo system to follow certainly the track or record mark string on an optical disc, and the amount of control involves an offset component when an ambient temperature changes or the recording/reproducing is continued for a long time.

Therefore, though it is irregular, only when the necessity of adjusting an offset caused by a temperature drift occurs, focus servo/tracking servo free from the influence of temperature drift becomes possible by the least necessary control (executing the correction of offset).

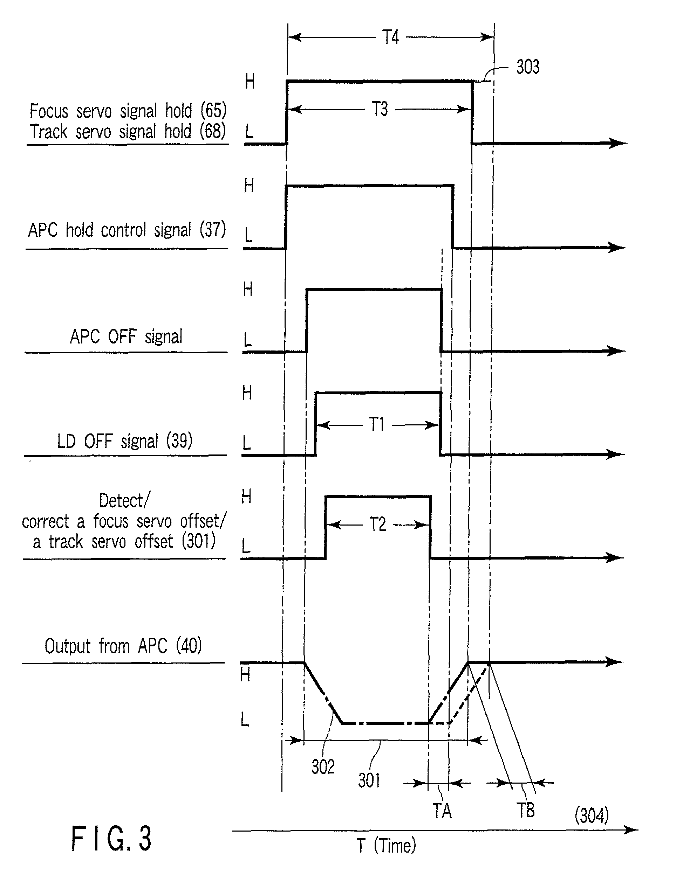

FIG. 2 shows a flowchart of operations for generating a control signal in the optical disc recording/reproducing apparatus. FIG. 3 shows a timing chart of various control signals.

In step S 201, the focus servo hold signal 65 and tracking servo hold signal 68 are set to "H". While these signals are "H", each servo is kept in the hold state and held in the preceding state.

The APC hold control signal 37 is set to "H". While this signal is "H", the output voltage (the driving current value just before not emitting light (interruption of laser beam output) 40 of the amplifier 32 is kept in the hold state (301 in FIG. 3) and held in the preceding state. When the APC hold function is not provided, the output voltage 40 of the amplifier 32 becomes the delay state (302 in FIG. 3).

The LD OFF signal 39 is set to "H". When this signal is "H", the LD (semiconductor laser) 11 is OFF and does not emit a laser beam (a laser output is interrupted). The time difference from the above APC hold (S202) may be substantially 0 (the same time).

The CPU 5 detects a focus offset detection signal 64 and a tracking offset detection signal 67 in the detection/correction section T2 (refer to FIG. 3), and an offset is corrected by a focus offset correction signal 63 and a tracking offset correction signal 66. Naturally, detection/correction of offset (T2) must be inhibited while information is being recorded on the optical disc M, for example, and permitted only while the laser output from the LD 11 is stopped ("T1" in FIG. 3).

The APC hold control signal 37 is set to "L". The APC circuit 3 returns to the original APC operation. The timing that the hold control signal 37 is changed to "L" is delayed by "TA" from the time of ending the detection/correction of offset (T2), but the same effect as that when the APC hold signal 37 is changed to "L" can be obtained at the time of ending the detection/correction of offset (T2).

The LD OFF signal 39 is set to "L". The semiconductor laser (LD) 11 turns on and emits a laser beam. The time difference from that the APC hold control signal 37 is "L" (S205) may be substantially 0 (the same time).

Set the focus servo hold signal 65 and tracking servo signal 68 to "L". Each servo returns to an ordinary servo (303). When the APC hold function is not provided, the output voltage 40 of the amplifier 32 is delayed, and the return to ordinary servo is also delayed (304 (TB)) by the influence until stabilizing (302). Namely, the servo hold time becomes longer than T3 by T4 (the present invention).

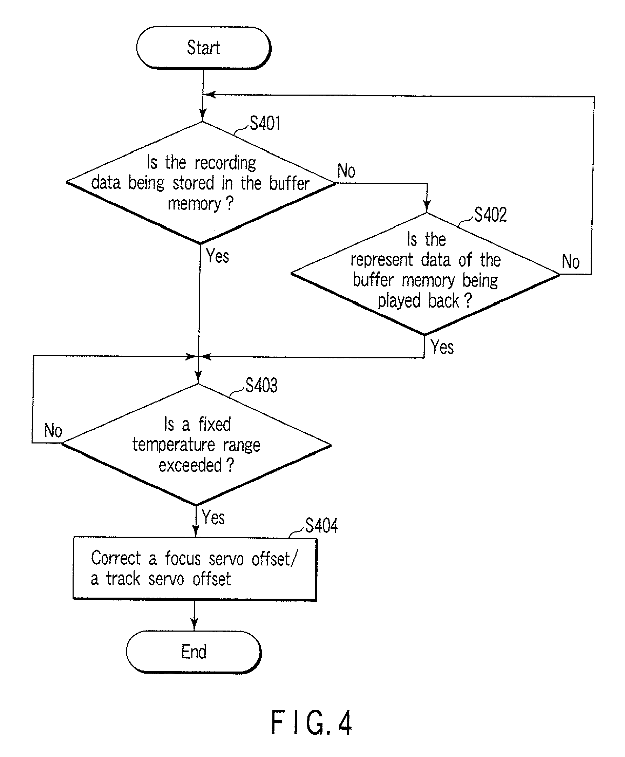

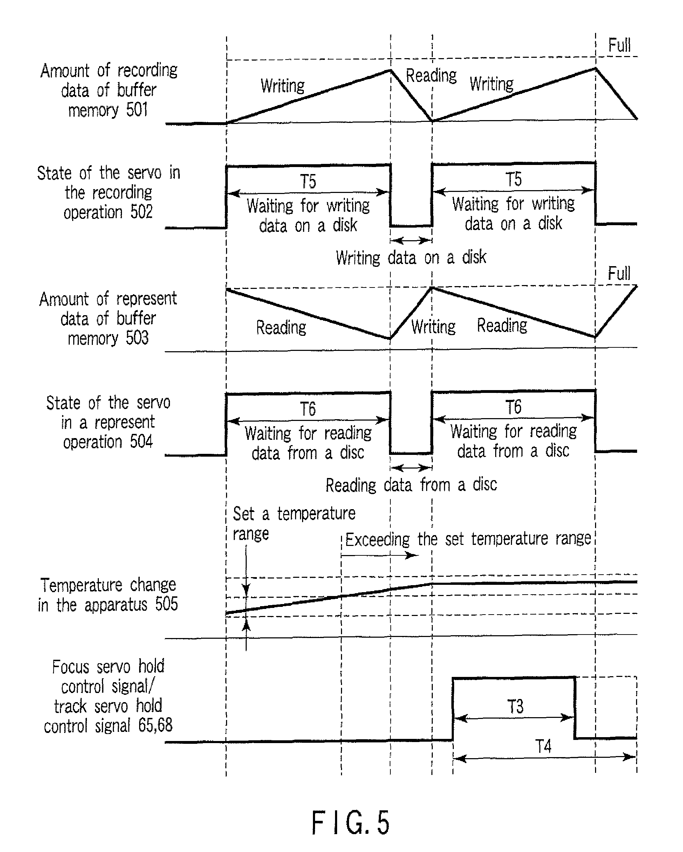

FIG. 4 shows a flowchart of operations for correcting a focus servo offset and a track servo offset in the optical disc recording/reproducing apparatus. FIG. 5 shows a timing to start correction of offset.

In step S 401, whether recording data is being stored in the buffer memory is checked. During the recording operation, standby of the servo (502 in FIG. 5) while recording data is being stored in the buffer memory (501 in FIG. 5) is monitored.

In step S 402, whether reproducing data of the buffer memory is being reproduce is checked. During the reproduce operation, standby of the servo (504 in FIG. 5) while reproducing data of the buffer memory is being outputted (503 in FIG. 5) is monitored.

In step S 403, whether a temperature in the apparatus exceeds a fixed temperature range is checked. Namely, whether a temperature change in the apparatus exceeds a preset range is monitored by the checking of the output of the temperature change detector 71 by the CPU 5 [505 in FIG. 5].

In step S 404, a focus offset/tracking offset is corrected. Namely, the laser beam output from the semiconductor laser 11 is stopped during standby of the servo, and when an offset of the servo caused by a temperature drift is detected, the offset amount is specified and the offset is corrected (servo hold signals 65 and 68). By this operation, the servo hold time is reduced from T4 to T3, and the correction of offset is completed in the section the servo is standby.

As explained above, by providing a sample hold circuit in the APC circuit and holding a driving current value just before the laser output of a laser source is interrupted (not emitted), the time required to stabilize the laser beam intensity caused by the control operation of the APC circuit after re-lighting is reduced.

By this operation, the servo hold time is reduced, an influence to the servo system is eliminated, and stable control to improve the tracking performance of the servo system without a malfunction becomes possible.

Therefore, it is possible to provide an optical disc recording/reproducing apparatus, which reduces offset correction time to correct an offset of a servo system, prevents a malfunction of a servo system, and stably records, reading out or erases information.

The present invention is not limited to the embodiments described hereinbefore. The invention may be embodied in other specific forms or modified without departing from its spirit or essential characteristics. Each embodiment may be appropriately combined as far as possible. In this case, the effect by combination will be obtained.

The present invention is also not limited to the embodiments described above and can be modified in various manners without departing from the spirit and scope of the invention.

For example, the present invention can provide:

An optical disc recording/reproducing apparatus having an optical head for condensing light from a light source on a recording medium, an auto power controlling means for controlling a drive current value to a light source to make the power of light constant, based on changes of a level of a monitor signal corresponding to a power level of light outputted from a light source, and a signal processing means for generating at least one of a focus servo error signal and a tracking servo error signal for correcting an offset of the optical head, comprising:
a light emission controlling means for stopping an output of light from a light source while information is being recorded in or reading out from a recording medium;
a servo holding means for holding at least one of a focus servo error signal and a tracking servo error signal, while an output of light from a light source is being stopped by the light emission controlling means;
an offset detecting means for detecting an offset component of a corresponding error signal, while at least one of focus servo error signal and tracking servo error signal is being held by the servo holding means;
an offset correcting means for correcting an offset component of the corresponding error signal, based on the output of the offset detecting means; and
a sample holding means, included in the auto power controlling means, for holding a driving current value supplied to a light source just before an output of light from a light source is stopped by the light emission controlling means.

The present invention can also provide:

An optical disc recording/reproducing apparatus having an optical head for condensing light from a light source on a recording medium, an auto power controlling means for controlling a drive current value to a light source to make the power of light constant, based on changes of a level of a monitor signal corresponding to a power level of light outputted from a light source, and a signal processing means for generating at least one of a focus servo error signal and a tracking servo error signal for correcting an offset of the optical head, comprising:
a light emission controlling means for stopping an output of light from a light source while information is being recorded in or reading out from a recording medium;
a servo holding means for holding at least one of a focus servo error signal and a tracking servo error signal, while an output of light from a light source is being stopped by the light emission controlling means;
an offset detecting means for detecting an offset component of a corresponding error signal, while at least one of focus servo error signal and tracking servo error signal is being held by the servo holding means;
an offset correcting means for correcting an offset component of the corresponding error signal, based on the output of the offset detecting means; and
a sample holding means, included in the auto power controlling means, for holding a driving current value supplied to a light source just before an output of light from a light source is stopped by the light emission controlling means; and
a buffer memory for holding temporarily information reproducing from a recording medium, wherein the time to hold the servo error signal is set within a range of time required to read information from the buffer memory.

The present invention can also provide:

An optical disc recording/reproducing apparatus having an optical head for condensing light from a light source on a recording medium, an auto power controlling means for controlling a drive current value to a light source to make the power of light constant, based on changes of a level of a monitor signal corresponding to a power level of light outputted from a light source, and a signal processing means for generating at least one of a focus servo error signal and a tracking servo error signal for correcting an offset of the optical head, comprising:
a light emission controlling means for stopping an output of light from a light source while information is being recorded in or reading out from a recording medium;
a servo holding means for holding at least one of a focus servo error signal and a tracking servo error signal, while an output of light from a light source is being stopped by the light emission controlling means;
an offset detecting means for detecting an offset component of a corresponding error signal, while at least one of focus servo error signal and tracking servo error signal is being held by the servo holding means;
an offset correcting means for correcting an offset component of the corresponding error signal, based on the output of the offset detecting means; and
a sample holding means, included in the auto power controlling means, for holding a driving current value supplied to a light source just before an output of light from a light source is stopped by the light emission controlling means; and
a buffer memory for holding temporarily information reproducing from a recording medium, wherein the time to hold the servo error signal is set within a range of time required to write information into the buffer memory.

The present invention can also provide:

An optical disc recording/reproducing apparatus comprising:
a light source for outputting light;
an object lens for condensing light from a light source on a recording medium;
a monitoring optical detector for monitoring the intensity of light from a light source;
a data optical detector for detecting light reflected from a recording medium;
a servo mechanism for controlling the positions of the object lens and recording medium, based on the output from the data optical detector;
a temperature sensor for detecting a temperature in the apparatus;
an offset detector for detecting an offset component of the servo amount in the servo mechanism caused by a temperature change;
an offset correction mechanism for correcting the servo amount based on the offset component detected by the offset detector;
a light source control unit for supplying the light source with a driving current to set an output of light from the light source;
a power control unit which has a sample hold part for holding the largeness of the driving current supplied from the light source control unit to the light source, and outputs a monitoring output as a reference of setting the largeness of a driving current to be supplied from the light source control unit to the light source based on the output from the monitoring optical detector, when the temperature in the apparatus detected by the temperature sensor exceeds a fixed range, and
a driving control unit which holds the largeness of a driving current supplied from the light source unit to the light source in the sample hold part of the power control unit, interrupts a driving signal supplied from the light source control unit to the light source, and outputs a driving current of the largeness held in the sample hold part from the light source control unit to the light source at the end of the offset correction by the offset correction mechanism, when an offset is detected by the offset detector and an offset is corrected by the offset correction mechanism.

## Claims

1. An optical disc recording/reproducing apparatus (1) **characterized by** comprising:
an optical head (2) for focusing light from a light source on a recording medium;
a signal processing means (4, 52, 53) for detecting at least one of a focus servo error signal and a tracking servo error signal for correcting an offset of the optical head;
a light emission controlling means (3) for stopping an output of light from a light source while information is being recorded in or reading out from a recording medium;
a servo holding means (4, 57, 62) for holding at least one of a focus servo error signal and a tracking servo error signal, while an output of light from a light source is being stopped by the light emission controlling means;
an offset detecting means (4, 5) for detecting an offset component of a corresponding error signal, while at least one of focus servo error signal and tracking servo error signal is being held by the servo holding means;
an offset correcting means (4, 58) for correcting an offset component of the corresponding error signal, based on the output of the offset detecting means;
a temperature detecting means (71) for detecting a temperature in the apparatus; and
a buffer memory (70) for holding temporarily information reading out from a recording medium,
wherein the timing of stopping an output of light from a light source by the light emission controlling means is when a temperature change in the apparatus detected by the temperature detecting means exceeds a preset range, and
the time to hold the servo error signal is set within a range of time required to read reproducing information from a buffer memory.

2. The optical disc recording/reproducing apparatus according to claim 1, **characterized by** further comprising a sample holding means (3, 33) for holding a driving current value supplied to a light source just before an output of light from a light source is stopped by the light emission controlling means.

3. An optical disc recording/reproducing apparatus (1) **characterized by** comprising:
an optical head (2) for condensing light from a light source on a recording medium;
a signal processing means (4, 52, 53) for detecting at least one of a focus servo error signal and a tracking servo error signal for correcting an offset of the optical head;
a light emission controlling means (3) for stopping an output of light from a light source while information is being recorded in or reading out from a recording medium;
a servo holding means (4, 57 ,62) for holding at least one of a focus servo error signal and a tracking servo error signal, while an output of light from a light source is being stopped by the light emission controlling means;
an offset detecting means (4, 5) for detecting an offset component of a corresponding error signal, while at least one of focus servo error signal and tracking servo error signal is being held by the servo holding means;
an offset correcting means (4, 58) for correcting an offset component of the corresponding error signal, based on the output of the offset detecting means;
a temperature detecting means (71) for detecting a temperature in the apparatus; and
a buffer memory (70) for holding temporarily information played back from a recording medium,
wherein the timing of stopping an output of light from a light source by the light emission controlling means is when a temperature change in the apparatus detected by the temperature detecting means exceeds a preset range, and
the time to hold the servo error signal is set within a range of time required to read information from a buffer memory.

4. The optical disc recording/reproducing apparatus according to claim 3, **characterized by** further comprising a sample holding means (3, 33) for holding a driving current value supplied to a light source just before an output of light from a light source is stopped by the light emission controlling means.

5. A method of correcting an offset of a servo system in an optical disc recording/reproducing apparatus having an optical head for condensing light from a light source on a recording medium, and a signal processing means for generating at least one of a focus servo error signal and a tracking servo error signal for correcting an offset of the optical head, **characterized by** comprising:
detecting that a temperature change in the apparatus detected by a temperature detecting means exceeds a preset range;
stopping an output of light from a light source for a fixed time period;
holding a focus servo error signal and a tracking servo error signal while an output of light from a light source is being stopped;
detecting an offset component of a focus servo error signal and a tracking servo error signal while each error signal is being held; and
correcting an offset component detected within fixed time.

6. The method of correcting an offset of a servo system according to claim 5, **characterized in that** a detected offset component is corrected within the time required to read reproducing information from a buffer memory which temporarily holds information played back from a recording medium.

7. The method of correcting an offset of a servo system according to claim 6, **characterized in that** a driving current value supplied to a light source just before an output of light from a light source is stopped for a fixed time period is held while an offset component is being detected and corrected, and light is outputted based on the held driving current value when light is outputted again from a light source.

8. The method of correcting an offset of a servo system according to claim 5, **characterized in that** a detected offset component is corrected within the time required to write information to be recorded on a recording medium in a buffer memory which temporarily holds the information to be recorded on a recording medium.

9. The method of correcting an offset of a servo system according to claim 6, **characterized in that** a driving current value supplied to a light source just before an output of light from a light source is stopped for a fixed time period is held while an offset component is being detected and corrected, and light is outputted based on the held driving current value when light is outputted again from a light source.

10. An optical disc recording/reproducing apparatus (1) having an optical head (2) for condensing light from a light source (11) on a recording medium, an auto power controlling means (3) for controlling a drive current value to a light source to make the power of light constant, based on changes of a level of a monitor signal corresponding to a power level of light outputted from a light source, and a signal processing means (4) for generating at least one of a focus servo error signal and a tracking servo error signal for correcting an offset of the optical head, **characterized by** comprising:
a light emission controlling means (36) for stopping an output of light from a light source while information is being recorded in or reading out from a recording medium;
a servo holding means (57, 62) for holding at least one of a focus servo error signal and a tracking servo error signal, while an output of light from a light source is being stopped by the light emission controlling means;
an offset detecting means (5) for detecting an offset component of a corresponding error signal, while at least one of focus servo error signal and tracking servo error signal is being held by the servo holding means;
an offset correcting means (58) for correcting an offset component of the corresponding error signal, based on the output of the offset detecting means; and
a sample holding means (33), included in the auto power controlling means, for holding a driving current value supplied to a light source just before an output of light from a light source is stopped by the light emission controlling means.

11. The optical disc recording/reproducing apparatus according to claim 10, **characterized by** further comprising a buffer memory (70) for holding temporarily information reproducing from a recording medium, wherein the time to hold the servo error signal is set within a range of time required to read information from the buffer memory.

12. The optical disc recording/reproducing apparatus according to claim 10, **characterized by** further comprising a buffer memory (70) for holding temporarily information played back from a recording medium, wherein the time to hold the servo error signal is set within a range of time required to write information into the buffer memory.

13. An optical disc recording/reproducing apparatus (1) **characterized by** comprising:
a light source (11) for outputting light;
an object lens (14) for condensing light from a light source on a recording medium;
a monitoring optical detector (17) for monitoring the intensity of light from a light source;
a data optical detector (16) for detecting light reflected from a recording medium;
a servo mechanism (18) for controlling the positions of the object lens and recording medium, based on the output from the data optical detector;
a temperature sensor (71) for detecting a temperature in the apparatus;
an offset detector (5) for detecting an offset component of the servo amount in the servo mechanism caused by a temperature change;
an offset correction mechanism (58) for correcting the servo amount based on the offset component detected by the offset detector;
a light source control unit (3) for supplying the light source with a driving current to set an output of light from the light source;
a power control unit (33) which has a sample hold part for holding the largeness of the driving current supplied from the light source control unit to the light source, and outputs a monitoring output as a reference of setting the largeness of a driving current to be supplied from the light source control unit to the light source based on the output from the monitoring optical detector, when the temperature in the apparatus detected by the temperature sensor exceeds a fixed range, and
a driving control unit (36) which holds the largeness of a driving current supplied from the light source unit to the light source in the sample hold part of the power control unit, interrupts a driving signal supplied from the light source control unit to the light source, and outputs a driving current of the largeness held in the sample hold part from the light source control unit to the light source at the end of the offset correction by the offset correction mechanism, when an offset is detected by the offset detector and an offset is corrected by the offset correction mechanism.
